Europäisches Patentamt

European Patent Office

Office européen des brevets

(19)

(11) Veröffentlichungsnummer: **0 091 559**
A1

(12) # EUROPÄISCHE PATENTANMELDUNG

(21) Anmeldenummer: 83102298.3

(22) Anmeldetag: 09.03.83

(51) Int. Cl.³: **B 29 C 27/02**
**B 42 D 15/02**

(30) Priorität: **14.04.82 DE 8210527 U**

(43) Veröffentlichungstag der Anmeldung:
**19.10.83 Patentblatt 83/42**

(84) Benannte Vertragsstaaten:
**AT BE CH DE FR GB IT LI LU NL SE**

(71) Anmelder: **Hoesch Werke Aktiengesellschaft**
**Eberhardstrasse 12**
**D-4600 Dortmund 1(DE)**

(72) Erfinder: **Reyer, Manfred, Dipl.-Ing.**
**Altumstrasse 3**
**D-4600 Dortmund 30(DE)**

(72) Erfinder: **Schmidts, Klaus**
**Ludolfweg 2**
**D-4600 Dortmund 70(DE)**

(54) **Press- und Ausgleichsplatte für eine Heizpresse.**

(57) Eine Preß- und Ausgleichsplatte 1 für das Verschweißen von beschrifteten Folien aus thermoplastischem Kunststoff zu einschichtigen Ausweisen in einer Heizpresse wird zur Reduzierung der Schweißzeit als Verbundplatte aus einer Trägerplatte 2, einer Ausgleichsschicht 3 und einer Folie 4 ausgebildet.

Fig. 2

EP 0 091 559 A1

Croydon Printing Company Ltd.

Estel Hoesch Werke Aktiengesellschaft
Eberhardstraße 12, 4600 Dortmund 1

Preß- und Ausgleichsplatte für eine Heizpresse

Die Neuerung bezieht sich auf eine Preß- und Ausgleichsplatte für das Verschweißen von beschrifteten Folien aus thermoplastischem Kunststoff zu einschichtigen Ausweisen in einer Heizpresse.

Es sind Heizpressen zum Verschweißen von beschrifteten Folien aus thermoplastischem Kunststoff zu einschichtigen Ausweisen bekannt, bei denen Unebenheiten der Heizplatten und Ungenauigkeiten im Preßraum durch Preß- und Ausgleichsplatten ausgeglichen werden.

Die bisher eingesetzten Preß- und Ausgleichsplatten beeinflussen jedoch insbesondere wegen ihrer relativ schlechten Wärmeleitfähigkeit die Schweißzeit ungünstig.

Der Neuerung liegt die Aufgabe zugrunde, eine Preß- und Ausgleichsplatte zu schaffen, mit der eine Reduzierung der Schweißzeit ermöglicht wird.

Neuerungsgemäß wird diese Aufgabe dadurch gelöst, daß die Preß- und Ausgleichsplatte eine Verbundplatte aus einer Trägerplatte, einer Ausgleichsschicht und einer Folie ist.

Nach einem weiteren Merkmal der Neuerung ist die Trägerplatte aus Stahlblech hergestellt.

Die Ausgleichsschicht besteht aus einer Klebstoffmischung. Vorzugsweise ist die Ausgleichsschicht als Klebband mit einer unteren und einer oberen Klebfläche und die Folie als Metallfolie ausgebildet.

Im folgenden wird die Neuerung anhand einer Zeichnung, in der ein Ausführungsbeispiel schematisch dargestellt ist, beschrieben.

Es zeigt

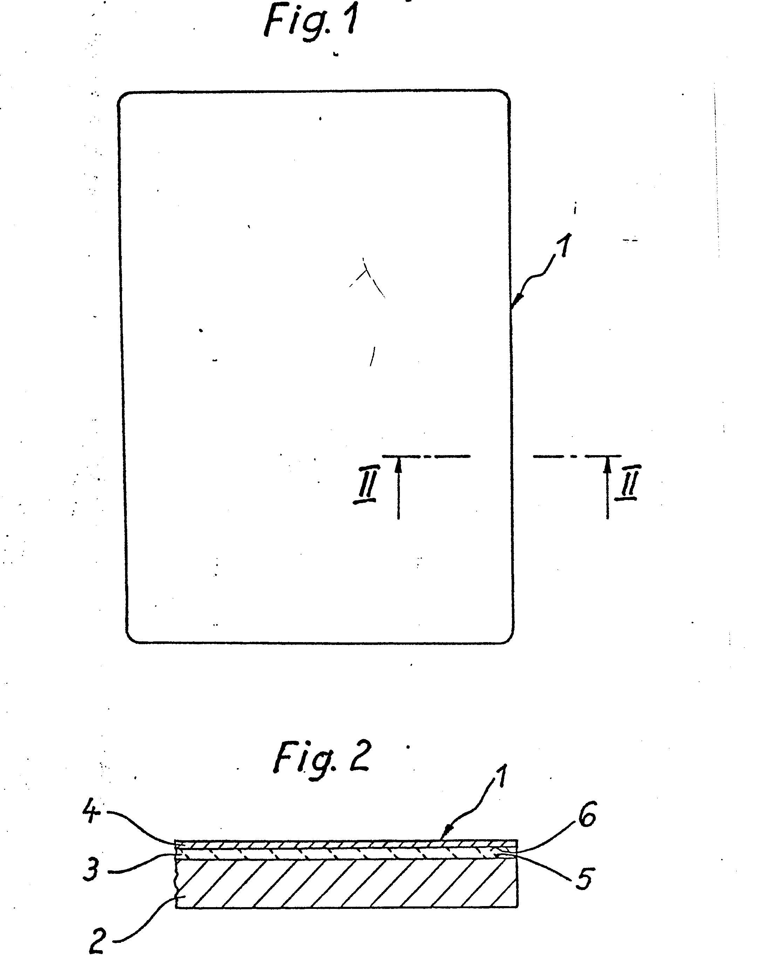

Fig. 1     eine Preß- und Ausgleichsplatte in natürlicher Flächengröße im Grundriß,

Fig. 2     einen Teilschnitt durch die Preß- und Ausgleichsplatte entsprechend der Linie II - II in Fig. 1 im vergrößerten Maßstab.

Die Preß- und Ausgleichsplatte 1 ist eine Verbundplatte aus einer Trägerplatte 2 am Stahlblech, einer Ausgleichsschicht 3 und einer Folie 4 aus Kupfer.

Die Ausgleichsschicht 3 ist ein Klebband mit einer unteren und einer oberen Klebfläche 5, 6.

Die Preß- und Ausgleichsplatte 1 wird in nicht näher dargestellter Weise zwischen der Heizplatte einer Heizpresse und einer Lage aus mehreren, beschrifteten und zu verschweißenden Kunststoffolien angeordnet, wobei die Folie 4 direkt mit der Heizplatte in Berührung kommt und das Verschweißen zu einem einschichtigen Ausweis mit kurzer Schweißzeit ermöglicht wird.

0091559

Estel Hoesch Werke Aktiengesellschaft
Eberhardstraße 12, 4600 Dortmund 1

Schutzansprüche

1. Preß- und Ausgleichsplatte für das Verschweißen von beschrifteten Folien aus thermoplastischem Kunststoff zu einschichtigen Ausweisen in einer Heizpresse, dadurch gekennzeichnet, daß sie eine Verbundplatte aus einer Trägerplatte (2), einer Ausgleichsschicht (3) und einer Folie (4) ist.

2. Preß- und Ausgleichsplatte nach Anspruch 1, dadurch gekennzeichnet, daß die Trägerplatte (2) aus Stahlblech besteht.

3. Preß- und Ausgleichsplatte nach Anspruch 1, dadurch gekennzeichnet, daß die Ausgleichsschicht (3) aus einer Klebstoffmischung besteht.

4. Preß- und Ausgleichsplatte nach Anspruch 1, dadurch gekennzeichnet, daß die Ausgleichsschicht (3) ein Klebband mit einer unteren und einer oberen Klebfläche (5, 6) ist.

5. Preß- und Ausgleichsplatte nach Anspruch 1, dadurch gekennzeichnet, daß die Folie (4) eine Metallfolie ist.

## Fig. 1

## Fig. 2

**Europäisches Patentamt**

# EUROPÄISCHER RECHERCHENBERICHT

| EINSCHLÄGIGE DOKUMENTE | | | EP 83102298.2 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
| A | <u>AT - B - 353 594</u> (G.A.O. Gesell-SCHAFT FÜR AUTOMATION UND ORGANI-SATION)<br><br>    * Gesamt *<br><br>        ---- | | B 29 C 27/02<br>B 42 D 15/02 |
| | | | RECHERCHIERTE SACHGEBIETE (Int. Cl. ³) |
| | | | B 29 C<br>B 42 D |

Der vorliegende Recherchenbericht wurde für alle Patentansprüche erstellt.

| Recherchenort | Abschlußdatum der Recherche | Prüfer |
|---|---|---|
| WIEN | 21-07-1983 | BAUMGARTNER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, überein-stimmendes Dokument

EPA Form 1503. 03.82